# EUROPEAN PATENT APPLICATION

(11) **EP 4 079 455 A1**
(43) Date of publication of application: **26.10.2022**
(21) Application number: 21382351.1
(22) Date of filing: 22.04.2021
(51) Int. Cl.: B25B 29/02, F16B 31/04

(54) **DEVICE FOR AUTOMATICALLY RETIGHTENING BOLTED JOINTS AND METHOD FOR INSTALLING SAID DEVICE**

(71) Applicant: Fundación Tecnalia Research & Innovation, 20009 Donostia - San Sebastián (ES)
(72) Inventor: Berque, Joannes, 20009 DONOSTIA-SAN SEBASTIAN (Gipuzkoa) (ES); Amieva Llavona, Jose Manuel, 20009 DONOSTIA-SAN SEBASTIAN (Gipuzkoa) (ES); Rico Rubio, Antonio, 20009 DONOSTIA-SAN SEBASTIAN (Gipuzkoa) (ES); Villate Martinez, Jose Luis, 20009 DONOSTIA-SAN SEBASTIAN (Gipuzkoa) (ES); Perez Moran, German, 20009 DONOSTIA-SAN SEBASTIAN (Gipuzkoa) (ES)
(74) Representative: Balder IP Law, S.L.

(57) **Abstract**

A device (1) for automatically retightening bolted joints comprising: an inner body (2) having a clamping means configured for coupling a bolt (200); an outer body (3) configured for housing the inner body (2) rotatably, and where the outer body (3) is configured for being coupled to a nut (100); a torsion spring (4) connected between the inner body (2) and the outer body (3); and a locking means (5) selectively blocking the rotation between inner body (2) and outer body (3) such that, when a proximal surface (101) of the nut (100) or a proximal end of the bolt (200) moves proximally, the locking means (5) releases the rotation between the inner body (2) and the outer body (3), whereby the torsion spring (4) causes the outer body (3) to retighten the nut (100). A method for installing a device for automatically retightening bolted joints is also disclosed.

## Description

### TECHNICAL FIELD

The present invention belongs to the field of bolted joint engineering. A first object of the present invention is a device that, with no human intervention, tightens nuts as needed to ensure proper tension in bolted joints. A second object of the present invention is a method for installing said device.

### STATE OF THE ART

The problem of ensuring proper tension is central to bolted joints engineering. It is also a significant cost for many structures. For example, bolt inspection and maintenance in offshore wind turbines typically requires some 10 thousand euros a year per turbine.

Many of the potential problems in bolted joints can be avoided by proper pre-load of the bolts and nuts during installation. However, certain problems such as the slow deformation of flanges under compression, cannot be resolved even with perfect pre-load. Once adequate tension is lost a host of problems may arise, such as inadequate compression of flanges, loosening of nuts, or increased vulnerability to fatigue. This is one reason many engineers have long sought solutions that would allow automatic re-tightening of nuts.

Document US1763505A discloses an approach consisting of storing a tightening torque in a coiled spring. One end of the spring is locked to the bolt and the other end of the spring is locked to the nut. The spring thus exerts a tightening torque between the nut and bolt.

Document US4812096A is also based on the concept of storing torque in a spring. The spring rotates the nut until its torque is resisted exactly by the nut's resistance to rotation. The system can retighten a nut when, for example, a wooden beam shrinks due to loss of moisture. The mechanism for retightening is that when the beams shrink, the force opposing the tightening of the nut decreases. The result is that the torque stored in the spring is then able to overcome the resistance of retightening of the nut. This can occur up to the point where the torque from the spring will be opposed by a sufficient resistance to rotation from the nut.

Document US9255599B1 discloses a system where the torque is stored on a spring that is not mounted directly on the bolt nut. Instead, the spring is independently mounted on the flange or beam, and mechanically connected to the nut and bolt via an elongate member such as cable. This torque is then delivered from the spring to the bolt and nut via this cable. This arrangement allows to store more torque more durably.

In the three prior art documents disclosed above, the force opposing the tightening force of the spring is the resistance of the nut to rotation. An important issue with this system is that the tightening torque is mainly resisted by friction between the nut, bolt and flange/beam. It is known in the field that only about 10% of the torque is delivered to tensioning the bolt (which is the desired effect). The rest of the torque is taken in roughly similar amounts by friction on the threads and friction on the nut face in contact with the flange. Hence, a 5% increase or decrease in friction may resist the spring's torque better than even a 50% change in the tension of the bolt.

Friction depends on many factors and cannot be predicted reliably. It is arguably the central problem in bolted joint design and installation. Critically, its evolution over a long time is even more difficult to predict. For example, friction may increase when lubrication used during installation wears off. If friction increases only 5%, the torque stored in the spring is going to be too low to retighten the bolt. Conversely, even if the tension in the bolt has decreased 50%, a 5% increase in friction will block the spring from retightening the nut. In other cases, friction may decrease over time for various reasons such as creep. Then the torque may overtighten an adequately tightened bolt, also a dangerous situation.

While there exist documents disclosing means for preventing the spring to apply its torque to the nut and bolt until desired, these devices do not solve the aforementioned problem, as they only allow for keeping the torque stored until installation of the bolt and nut.

Document US6390747B1 discloses a shrinkage compensator system which includes a trigger that can block and release the applied torque. Releasing the trigger at installation allows for automatic height adjustment for a screw on a wall hold down.

Document US6880433B1 discloses means to switch between a state where the torque is applied to the nut and bolt, and a state where it is blocked from being applied. This allows among other things to compress the spring before shipment, and then release the torque at installation.

In both cases, the torque must be released manually and, once released, it is continuously active. The torque thus causes the bolt to rotate until rotation stops due to friction and tension and keeps acting on the bolt thereafter. The problem discussed above remains, namely that 90% of this resistance to rotation is consumed by friction. No mechanism is disclosed where the release of the torque stored in the spring is controlled by the loss of tension in the bolted joint.

### DESCRIPTION OF THE INVENTION

The present invention provides a relatively simple mechanical solution to ensure that the stored torque is released when, and only when, there is loss of tension in the bolt. Furthermore, once the bolt is suitably retightened, the torque ceases to be applied to the nut and bolt.

In this invention, the control of the release of the torque and retightening of the nut is controlled by the deformation of the of the bolt itself or of the deformation of the nut itself. Indeed, through Hooke's law, the deformation of the bolt is directly tied to the tension in the bolt. Deformation in the nut is directly linked to compression on the nut, and thus, tension in the bolt. This link is far more predictable and reliable than the link between nut resistance to rotation and tension, which, as discussed above, mainly depends on friction.

In the present document, the terms *"proximal'* and *"distal'* have the usual meaning they are given in the medical field. Namely, the term *"proximal'* refers to a side, end, or portion of the device located closest to the operator installing the device of the invention, while the term *"distal'* refers to a side, end or portion of the device located farthest to the operator installing the device of the invention.

In the present document, the *"longitudinal direction"* refers to the direction of the bolted joint the device of the invention eventually retightens, i.e. to the direction of a longitudinal axis of the corresponding bolt and nut comprised in the bolted joint. The "transverse direction" refers to any direction contained in a plane that is perpendicular to the longitudinal direction.

In the present document, the term *"bolt'* refers generally to a connection means comprising a head and a shank which, in turn, comprises a threaded portion. The bolt may be, e.g. a screw or the like.

A first aspect of the present invention is related to a device for automatically retightening bolted joints comprising a nut threaded into a threaded portion of a bolt having a longitudinal axis. As disclosed above, the longitudinal axis refers to the axis of the bolt and joint to be retightened. The device comprises the following component parts: an inner body, an outer body, a torsion spring means, and a locking means. These component parts are disclosed in detail below.

### a) Inner body

The inner body comprises a distal portion and a proximal portion.

Preferably, the distal and proximal portions of the inner body are cylindrical. More specifically, the diameter of the distal portion is usually larger than the diameter of the proximal portion, thereby providing space for the provision of the torsion spring means around the proximal portion of the inner body. However, other shapes and sizes of the distal and proximal portions are possible provided the inner body is rotatable within the outer body as disclosed in more detail further down in the present document.

The distal portion comprises a clamping means configured for clamping a threaded portion of the bolt. The clamping means could in principle have any configuration provided a secure connection between the inner body and the threaded portion of the bolt is achieved. For example, in a particularly preferred embodiment of the invention, the clamping means comprises a clamp body having at least one transverse tightening screw configured for causing said clamp body to pressure fit around said threaded portion of the bolt. Even more preferably, an inner cavity of the clamp body comprises a female thread configured to match the male thread of the bolt. The clamp body can therefore be both threaded and clamped to the threaded portion of the bolt, thereby providing an extremely secure connection therebetween.

### b) Outer body

The outer body, which is essentially hollow, comprises a distal portion and a proximal portion.

The proximal portion of the outer body is configured for housing the inner body rotatably around the longitudinal axis. That is, the inner body can be received inside the proximal portion of the hollow outer body in such a way that the inner body can rotate around the longitudinal axis while housed within the outer body. Thus, as disclosed in more detail further down in the present document, the torsion spring means, when loaded, provides a rotational biasing force selectively causing the inner body to rotate with respect to the outer body around the longitudinal axis, thereby providing a retightening force for the nut into the bolt.

The distal portion of the outer body is configured for being coupled to the nut. For example, according to a particularly preferred embodiment, an inner surface of the distal portion of the outer body is hexagon shaped. The outer body can therefore be displaced longitudinally in the distal direction until the nut fits inside the hollow distal portion of the outer body having the hexagonal inner surface. The distal portion of the outer body therefore engages the nut in a similar way as a tube spanner does.

Preferably, the outer body as a whole is preferably cylindrical, and therefore so are both the distal and the proximal portions thereof. However, other shapes are possible provided the inner body can rotate within the proximal portion of the outer body and the distal portion of the outer body can engage the nut.

In still one more embodiment of the invention, the outer body further comprises at least a first hole configured for a screwdriver to pass through for operating the tightening screws of the clamping means. For example, the first hole can be a radial hole in the outer body whose position matches the position of the tightening screws of the clamp body of the distal portion of the inner body when said inner body is housed within the outer body. The clamp body of the inner body can therefore be tightly clamped to the threaded portion of the bolt even when the inner body is housed within the outer body.

### c) Torsion spring means

The torsion spring means is connected between the inner body and the outer body such that, when loaded, said torsion spring means generates a biasing rotational force around the longitudinal axis between the inner body and the outer body. That is, the biasing rotational force generated by the torsion spring means tends to cause a relative rotation of the inner body with respect to the outer body around the longitudinal axis. Loading of the torsion spring means can be carried out, e.g. by rotating the outer body with respect to the inner body when the torsion spring means is suitably connected between inner and outer body.

The connection of the torsion spring means to the inner body and the outer body can have different configurations provided the above condition is met. For example, according to a particularly preferred embodiment of the invention, the torsion spring means comprises a helical spring provided around the proximal portion of the inner body, where said helical spring comprises a first end fastened to the inner body and a second end fastened to the outer body. Even more preferably, the first end of the helical spring is housed within a first orifice of the proximal portion of the inner body and the second end of the helical spring passes through a second hole of the outer body. With this configuration, when the outer body is rotated with respect to the inner body, the helical spring is loaded and a rotational biasing force, i.e. a torque, between the inner body and the outer body appears. Since the inner body is coupled to the rod and the outer body is coupled to the nut, a tightening torque is then transmitted to the bolt.

### d) Locking means

The locking means is configured for selectively blocking the rotation between the inner body and the outer body such that, when a proximal surface of the nut or the bolt is in an initial position, the locking means blocks the rotation between the inner body and the outer body while, upon the proximal surface of the nut moving proximally or the proximal end of the bolt moving distally a predetermined distance with respect to said initial position, the locking means releases the rotation between the inner body and the outer body, whereby the biasing force of the torsion spring means causes the outer body to retighten the nut.

This device therefore does not apply a continuous torque on the relevant nut. On the contrary, as long as the proximal surface of the nut remains in the initial position, the rotational biasing force, i.e. the tightening torque, is stored in the torsion spring means. Any rotational movement between the inner body and the outer body is blocked by the locking means. Eventually, when the nut starts to lose tension, the proximal surface of the nut will move proximally in the longitudinal direction. Alternatively, a proximal end of the bolt will move distally in the longitudinal direction. In any case, this movement will activate the locking means, thereby releasing the biasing rotational force causing the outer body (connected to the nut) to rotate with respect to the inner body (connected to the bolt). As a result, the nut is retightened. The retightening of the nut will cause the proximal surface of said nut to move distally in the longitudinal direction towards the initial position (or the proximal end of the bolt to move proximally in the longitudinal direction towards the initial position). When the proximal surface of the nut or proximal end of the bolt reaches the initial position, the locking means again block the rotation between the inner body and the outer body. The rotational biasing force still remaining in the torsion spring means is stored again until the nut loses tension again.

### First configuration: detection of the displacement of the proximal surface of the nut

In the first configuration, the displacement of the proximal surface of the nut taking place when there is a loss of tension in the connection is employed for controlling the operation of the locking means. The locking means could have a number of configurations provided the above-disclosed mode of operation is ensured. For example, according to a particularly preferred embodiment of the invention, the locking means comprises:

### d1) Locking plate

The locking plate is configured to abut against a proximal end of the outer body. While the locking plate could have any shape provided that a suitable abutment against the proximal end of the outer body is ensured, in particularly preferred embodiments of the invention the locking plate is preferably circular, thereby matching the preferred cylindrical shape of the outer body.

The locking plate further comprises a first borehole, whereby a rod stemming proximally in the longitudinal direction from the proximal portion of the inner body passes through said first borehole. The first borehole could be located at the centre of the locking plate when circular, and the rod could also stem from the centre of the proximal portion of the inner body when cylindrical. A proximal portion of the rod thus protrudes proximally through the first borehole of the locking plate.

As disclosed in more detail further below, the locking plate and the proximal end of the outer body are configured such that, when the locking plate is abutting (preferably firmly abutting) said proximal end of the outer body, rotation of the outer body with respect to said locking plate is prevented. The rotation prevention mechanism could be based on mere friction, or else the distal surface of the locking plate and the proximal end of the outer body could comprise complementary structures fitting into each other. In any case, when the locking plate is biased (preferably firmly biased) against the proximal end of the outer body, the outer body cannot rotate.

### d2) Pressure plate

The pressure plate is fastened to a proximal end of said rod. The fastening means between pressure plate and proximal end of the rod could have any suitable configuration, such as by threading a male thread of the proximal end of the rod into a female thread of a hole of the pressure plate. Alternatively, a suitable screw can be used for connecting the pressure plate to the rod.

### d3) Compression spring

The at least one compression spring means is provided between the pressure plate and a proximal surface of said locking plate. The at least one compression spring means generates a biasing force pushing the pressure plate distally against the proximal end of the outer body. In other words, the compression spring means is precompressed, thereby pushing the pressure plate and the pressure plate in opposite directions. Since the pressure plate is fixed to the end of the rod, the result is that the locking plate is pushed against the proximal end of the outer body.

### d4) Detection rod

The at least one detection rod is configured to be threaded into a respective second borehole of the locking plate until a distal end of said detection rod abuts against the proximal surface of the nut.

In a locking means thus configured, when the proximal surface of the nut is in the initial position, the biasing force exerted by the at least one compression spring means causes the locking plate to abut against the proximal end of the outer body, thereby blocking the rotation between the inner body and the outer body. As mentioned above, the rotation could be blocked by friction between the distal surface of the locking plate and the proximal end of the outer body. Alternatively, these two elements may comprise complementary structures fitting one into the other when the locking plate is pushed against the outer body. In any case, the fact is that, under these conditions of pressure applied distally on the locking plate, rotation of the outer body is prevented. However, upon the proximal surface of the nut moving proximally a predetermined distance with respect to said initial position, the detection rod is pushed in a proximal direction and so is the locking plate. The biasing force exerted by the compression spring is counteracted by the detection rod moving upwards, and then the rotation capability between the inner body and the outer body is released. When, as mentioned above, the rotation is blocked by mere friction, the proximal movement of the locking plate causes a reduction of the friction between said locking plate and the proximal end of the outer body. In alternative configurations based on complementary structures fitting into each other, the proximal movement of the locking plate causes the structures to separate, thereby no longer blocking the relative rotation between locking plate and inner body. In any case, the result is that the tightening force stored in the torsion spring means is released, and the nut is therefore retightened. When, as a result of the retightening of the nut, the proximal surface of the nut moves back in a distal direction and reaches the initial position again, the detection rod no longer pushes the locking plate proximally, and the locking plate also returns to the original position where the compression spring means pushes said locking plate against the outer body, thereby blocking preventing again any rotational movement of the outer body. The device thus returns to the original situation where the tightening torque remaining in the torsion spring means is stored.

In a particularly preferred embodiment of the invention, the device of the invention further comprises an auxiliary rotation blocking means configured for provisionally blocking the rotation between the inner body and the outer body during assembly of the device. More preferably, the auxiliary rotation blocking means comprises a blocking pin configured for passing through a third hole of the outer body until an end of said blocking pins enters a second orifice of the inner body.

The device of the present invention can be installed in the manner disclosed hereinbelow. In fact, the device is simultaneously assembled and installed in a bolted joint. Note that the following method steps need not be carried out exactly in the order disclosed below. In certain cases, two or more steps could be combined into a single step. Alternatively, the relative order between two or more steps could be altered. Such possible modifications from the order disclosed below are obvious in view of the present disclosure as a whole.

In other embodiments of the invention, the device includes an inner body that includes arms that compress against the flange with a high friction material. In this way, the torque of the spring can be opposed by friction on the flange instead of only torsion in the bolt. This can be used to relieve some of the torsion in the bolt.

In yet another embodiment of the invention, the spring can be used to release a visual indicator to facilitate detection of bolts that have lost tension. The spring is allowed to release its stored torque using the same control based on the change in nut thickness with compression. But instead or in addition to be used for turning the nut relative to the bolt, the spring is used to release a visual indicator, such as a small red flag. During inspections, this visual indicator can facilitate the identification of bolts which have lost some tension.

The second aspect of the present invention is directed to a method for assembling a device for automatically retightening bolted joints, where said bolted joints comprise a nut threaded into a threaded portion of a bolt having a longitudinal axis. This method comprises the following steps:
1. Connecting a torsion spring means to an inner body, where the inner body comprises a distal portion and a proximal portion, the distal portion further comprising a clamping means configured for clamping a threaded portion of the bolt.
2. Housing the inner body and the torsion spring means connected thereto within a proximal portion of a hollow outer body such that the inner body is rotatable around the longitudinal axis, the outer body further comprising a distal portion configured for being coupled to the nut.
3. Connecting the torsion spring means to the outer body such that, when loaded, said torsion spring means generates a biasing rotational force around the longitudinal axis between the inner body and the outer body.
4. Causing the outer body to rotate with respect to the inner body for loading the torsion spring means.
5. Actuating an auxiliary rotation blocking means for preventing the rotation between the inner body and the outer body.
6. Displacing the outer body longitudinally in a distal direction for coupling the distal portion of the outer body to the nut and coupling the clamping means of the distal portion of the inner body to the threaded portion of the bolt.
7. Setting up a locking means configured for selectively blocking the rotation between the inner body and the outer body such that, when a proximal surface of the nut is in an initial position, the locking means prevents the rotation between the inner body and the outer body while, upon the proximal surface of the nut moving proximally a predetermined distance with respect to said initial position, the locking means releases the rotation between the inner body and the outer body, whereby the biasing force of the torsion spring means causes the outer body to retighten the nut.
8. Actuating the auxiliary rotation blocking means for releasing the rotation between the inner body and the outer body.

In a particularly preferred embodiment of the method of the present invention, the step of setting up a locking means configured for selectively blocking the rotation between the inner body and the outer body further comprises the following steps:
7a. Abutting a locking plate against a proximal end of the outer body, where a rod stemming proximally in the longitudinal direction from the proximal portion of the inner body passes through a first borehole of the locking plate.
7b. Providing at least one compression spring means resting against a proximal surface of said locking plate.
7c. Fastening a pressure plate to a proximal end of said rod such that the compression spring means are compressed between the locking plate and said pressure plate, the compression spring means generating a biasing force pushing the pressure plate distally against the proximal end of the outer body.
7d. Threading at least one detection rod through at least a respective second borehole of the locking plate until a distal end of said detection rod abuts against the proximal surface of the nut such that, when the proximal surface of the nut is in the initial position, the biasing force exerted by the at least one compression spring means causes the locking plate to abut (preferably to firmly abut) against the proximal end of the outer body, thereby producing enough friction to block the rotation between the inner body and the outer body while, upon the proximal surface of the nut moving proximally a predetermined distance with respect to said initial position, the detection rod is pushed in a proximal direction and so is the locking plate, thereby releasing the rotation between the inner body and the outer body due to a reduction of the friction between said locking plate and the proximal end of the outer body.

In still one more particularly preferred embodiment of the method of the invention, the step of actuating the auxiliary rotation blocking means for blocking the rotation between the inner body and the outer body comprises:
5a. Introducing a blocking pin through a third hole of the outer body until an end of said blocking pins enters a second orifice of the inner body.

And the step of actuating the auxiliary rotation blocking means for releasing the rotation between the inner body and the outer body comprises:
8a. Extracting said blocking pin from the second orifice and the third hole.

In some embodiments, a wind turbine comprises the bolted joint.

### Second configuration: detection of the displacement of the proximal end of the bolt

In the second configuration, the displacement of the proximal end of the bolt taking place when there is a loss of tension in the connection is employed for controlling the operation of the locking means.

In the second configuration, the device of the invention comprises essentially the same components as the device according to the first configuration except for the structure of the locking means. An inner body is rigidly coupled to the proximal portion of the bolt, e.g. by means of clamping means such as those disclosed above. The inner body is coupled around the proximal portion of the bolt without protruding proximally from the proximal end of the bolt. A hollow outer body coupled to the nut houses the inner body. A torsion spring means is connected between the inner body and the outer body.

According to a particularly preferred embodiment of the invention, the locking means in the second configuration comprises a locking plate configured to abut against the proximal end of the bolt. In this second configuration, the bolt also has an axial borehole where a gage rod is provided. The gage rod abuts against a distal end of the borehole. The gage rod has a constant length, whereby any change in the length of the bolt can be detected merely by comparing the position of the proximal end of the bolt with the position of the proximal end of the gage rod. The locking plate has a central hole for allowing the proximal portion of the gage rod to pass through. The diameter of the locking plate is smaller than the diameter of the hollow outer body. The locking plate is coupled to the hollow outer body. The locking plate is also coupled to the gage rod in a rotatable manner but, at the same time, preventing any axial displacement of the locking plate with respect to the gage rod. The distal surface of the locking plate and the proximal surface of the end of the bolt are configured such that, when one abuts against the other, no relative rotation between locking plate and bolt is allowed. As disclosed above in connection to the first configuration, this effect can be implemented by means of mere friction, or else complementary structures can be provided on the relevant surface.

Now, while the bolt is sufficiently tightened, the distal surface of the locking plate abuts against the proximal surface of the end of the bolt. Thereby, any rotation of the hollow outer body with respect to the nut is blocked. When, as a consequence of a loss of tension, the bolt moves in the distal direction, the proximal surface of the end of the bolt also moves distally. Since the locking plate is locked to the gage rod and to the hollow outer body, the locking plate does not move distally but remains in its original position. Therefore, the proximal surface of the end of the bolt separates from the distal surface of the locking plate, thereby releasing the torque loaded in the torsion spring thus causing the nut to be retightened. Retightening the tool causes the proximal end of the bolt to move proximally until it again abuts against the distal surface of the locking plate, thereby blocking again the rotation between the two parts.

This configuration is advantageous in that detection of the displacement of the proximal end of the bolt may be easier than detecting the displacement of the proximal surface of the nut.

Preferred embodiments of the invention disclosed in connection with the first configuration are also applicable to the present second configuration where appropriate i.e. those not specifically directed to the definition of particular details of the locking means.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 shows a perspective cut-out view of a device according to a first configuration of the present invention.
Figures 2a-2p show perspective views of the steps carried out for installing the device according to the first configuration of the invention.
Figures 3a-3b schematically show the steps carried out for installing the device according to a second configuration of the invention.
Figures 4a-4b schematically show the operation of the device according to the second configuration of the invention.

### DESCRIPTION OF WAYS OF CARRYING OUT THE INVENTION

### First configuration: detection of the displacement of the proximal end of the nut

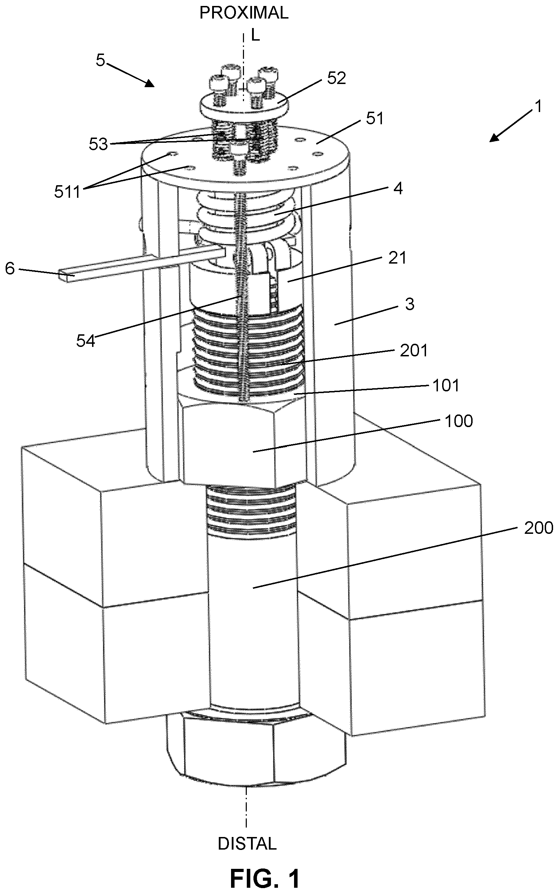

Fig. 1 shows an exemplary device (1) according to the first configuration of the present invention comprising an inner body (2), an outer body (3), a torsion spring means (4) connected between the inner body (2) and the outer body (3), and a locking means (5) selectively blocking the rotation between the inner body (2) and the outer body (3).

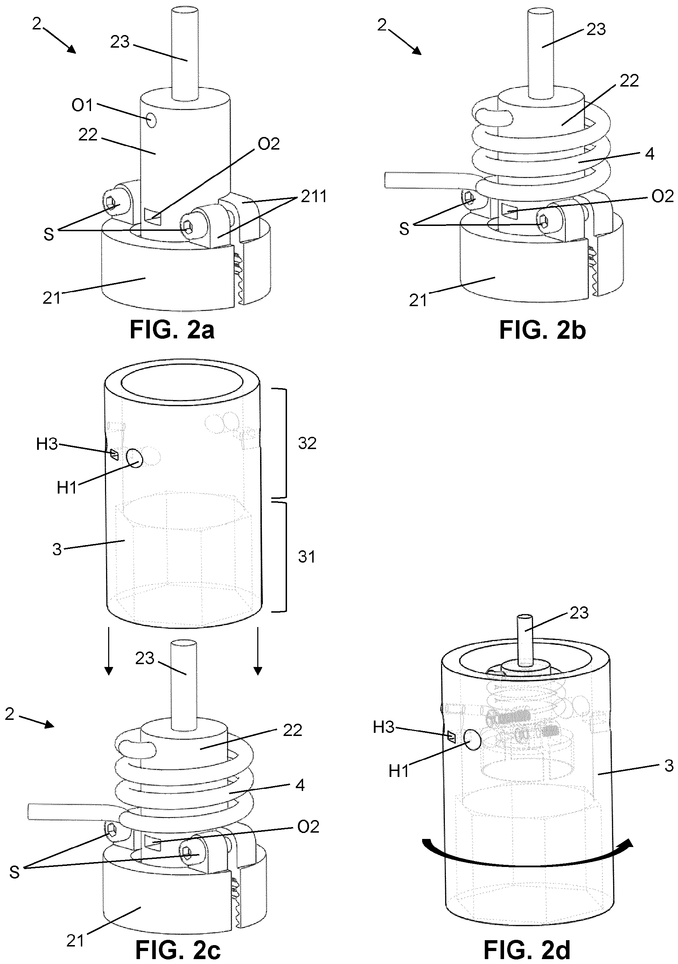

The inner body (2), shown in detail in Fig. 2a, comprises a cylindrical distal portion (21) and a cylindrical proximal portion (22), both portions being provided along a longitudinal axis (L) which, when the device (1) is installed, matches the axis of the respective bolt (100) and nut (200). The diameter of the distal portion (21) is larger than the diameter of the proximal portion (22). The distal portion (21) comprises a clamping means configured for clamping a threaded portion (201) of the bolt (200). This clamping means is a cylindrical clamp body formed by two arms having an end separated by a longitudinal slit. Two pairs of transverse flanges (211) having respective transverse threaded holes are configured for receiving two respective tightening screws (S). When the screws (S) are tightened, the two arms of the clamp body close an inner threaded cavity having an inner female thread. Therefore, when the threaded portion (201) of the bolt (200) is introduced into said cavity of the clamp body, tightening of the screws (S) ensures a secure fastening of the bolt (200) to the clamping means of the inner body (2). A proximal end of the proximal portion (22) of the inner body (2) further comprises a first radial orifice (01) intended for receiving a first end of the torsion spring means (4), which in the present exemplary device (1) is a helical spring. A distal end of the proximal portion (22) of the inner body (2) further comprises a second radial orifice (O2) for receiving a blocking pin (6) intended to provisionally prevent the rotation between inner body (2) and outer body (3).

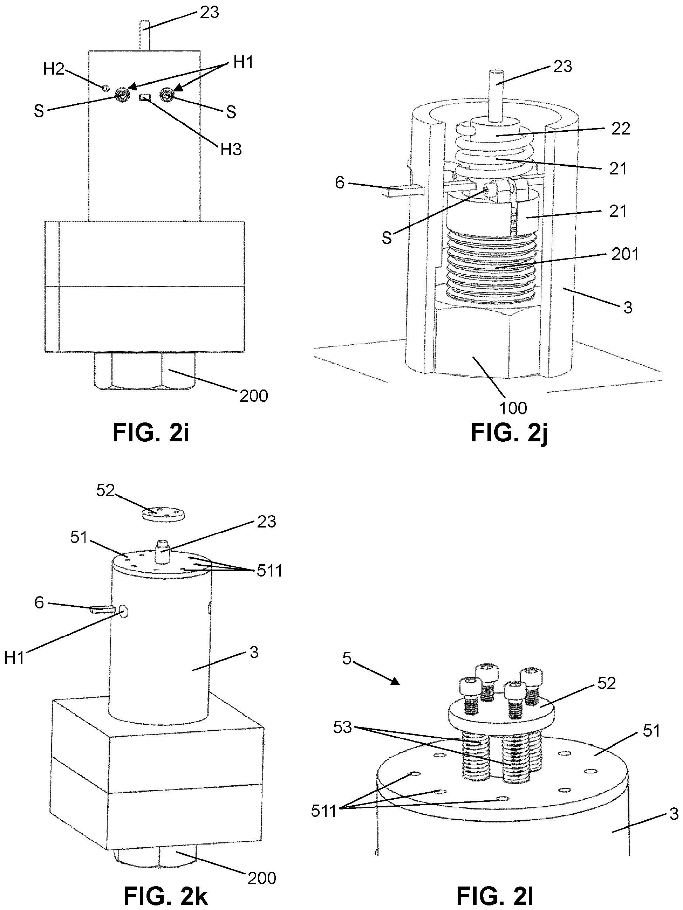

The outer body (3), shown in detail in Fig. 2c onwards, has a cylindrical shape comprised of a distal portion (31) and a proximal portion (32). The distal portion (31) is configured with an inner surface (311) having a hexagonal shape, much as a tube spanner, for matching the hexagonal shape of the nut (100). The outer body (3) further comprises two first radial holes (H1) provided in a position matching with the position of the head of the tightening screws (S) of the clamp body of the inner body (2) when said inner body (2) is housed within the proximal portion (32) of the outer body (3). The outer body (3) further comprises a second hole (H2) intended to receive a second end of the helical spring making up the torsion spring means (4) of the present exemplary embodiment. The second hole (H2) is best seen in Fig. 2i. The outer body (3) further comprises a third hole (H3) intended to receive the blocking pin (6).

As mentioned above, the torsion spring means (4) is a helical spring provided around the cylindrical proximal portion (22) of the inner body (2). The first end of the helical spring (4) is received within the first radial orifice (01) of the inner body (2) and the second end of the helical spring (4) is received within the third hole (H3) of the outer body (3). When loaded by turning the outer body (3) with respect to the inner body (2) housed therein, the helical spring (4) stores a rotational biasing force tending the outer body (3) to rotate with respect to the inner body (2).

The locking means (5) in the present exemplary device (1) comprise a locking plate (51), a pressure plate (52), four compression spring means (53), and two detection rods (54).

The locking plate (51) is a circular plate abutting against the proximal end of the outer body (3). The locking plate (51) has a centrally located first borehole and a number of peripheral second boreholes (511). A central rod (23) stemming proximally from the proximal portion (22) of the inner body (2) passes through said first borehole and protrudes proximally from said locking plate (51). The pressure plate (52) is fastened to the proximal end of said rod (23), e.g. by threading the proximal end of said rod into a central hole of said pressure plate (52). Four compression springs (53) are provided between the locking plate (51) and the pressure plate (52). The compression springs (53) are loaded, i.e. are compressed. Therefore, they tend to separate the locking plate (51) and the pressure plate (52) one from the other. Since the pressure plate (52) is fastened to the proximal end of the central rod (23), the resulting force of the compression springs (53) pushes the locking plate (51) distally against the proximal end of the outer body (3).

The proximal surface of the outer body (3) and the distal surface of the locking plate (51) are configured in such a way that, when they are compressed one against the other, the rotation of one with respect to the other is prevented. This effect can be achieved by mere friction between both elements. Alternatively, particularly shaped structures can be provided that fit or engage each other such that, when the locking plate (51) is pushed against the proximal surface of the outer body (3), rotation of one with respect to the other is prevented while, when the locking plate (51) is pushed proximally, or slightly separated from the proximal end of the outer body (3), rotation of one with respect to the other is allowed.

Two detection rods (54) are threaded into two of the several second boreholes (511) of the locking plate (511) with their respective distal ends abutting against the proximal surface (101) of the nut (100). With this configuration, when the proximal surface (101) of the nut (100) is in an initial position corresponding to a suitable tension of the bolted joint, the biasing force exerted by the at least one compression springs (53) causes the locking plate (51) to abut against the proximal end of the outer body (3), thereby preventing the rotation between the inner body (2) and the outer body (3). However, when the proximal surface (101) of the nut (100) moves proximally a predetermined distance with respect to said initial position due to a loss of tension, the detection rod (54) is pushed in a proximal direction and so is the locking plate (51), thereby releasing the rotation between the inner body (2) and the outer body (3). Since the inner body (2) is fastened to the threaded portion (201) of the bolt (200), the outer body (3) rotates and consequently causes the rotation of the nut (100) coupled thereto. The nut (100) is therefore tightened. The tightening of the nut (100) causes the proximal surface (101) thereof to move distally, thereby allowing the compression springs (53) to move the locking plate (51) distally until, again, said locking plate (51) abuts against the proximal end of the outer body (3). The rotation of the outer body (3) is again prevented, and therefore the remaining tightening torque stored in the helical spring (4) is saved for the next time the nut (100) loses tension.

Now, Figs. 2a-2p show how the above disclosed device (1) is assembled.

First, as shown in Fig. 2b, the helical spring (4) is connected to the inner body (2) shown in Fig. 2a. Therefore, the helical spring (4) is fitted around the distal portion (21) of the inner body (2) and the first end of said helical spring (4) is introduced into the first orifice (O1) of the inner body (2).

Then, as shown in Fig. 2c, the inner body (2) and the helical spring (4) connected thereto are introduced into the proximal portion of the outer body (3). In this situation, the inner body (2) is rotatable around the longitudinal axis (L) within the outer body (3). Then, as shown in Fig. 2d, the second end of the helical spring (4) is introduced into the second hole (H2) of the outer body (3). The outer body (3) is next rotated with respect to the inner body (2), thereby loading the helical spring (4). Naturally, the outer body (3) is rotated counterclockwise, such that the rotational biasing force stored in the helical spring (4) tends to cause the outer body (3) to rotate clockwise i.e. in the nut tightening direction.

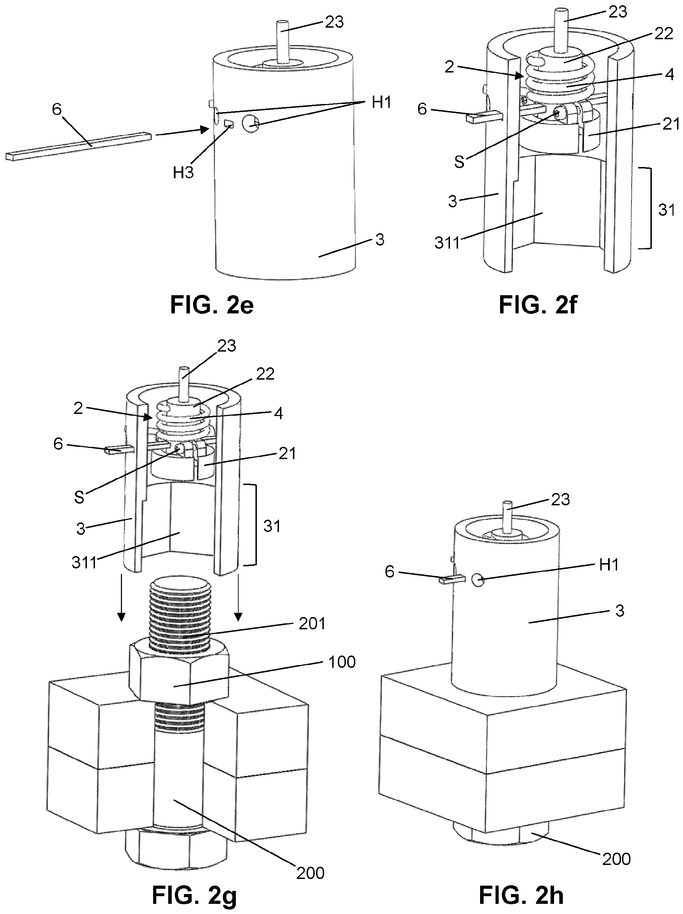

Once loaded, as shown in Fig. 2e, the locking pin (6) is introduced through the third hole (H3) of the outer body (3) and further into the second orifice (O2) of the inner body (2). The result is shown in Fig. 2f, where the inner body (2) is housed within the outer body (3) with the helical spring (4) fully loaded. The locking pin (6) prevents the relative rotation of the inner body (2) and the outer body (3).

Fig. 2g shows how the assembly disclosed above is displaced distally towards the nut (100) and the bolt (200), thereby arriving at the situation shown in Fig. 2h. The distal portion (31) of the outer body (3), having an hexagonal inner surface (311) matching the hexagonal outer surface of the nut (100), is thus coupled to said nut (100). In turn, the distal portion (21) of the inner body (2) engages the threaded portion (201). Thereto, a screwdriver is introduced through the first holes (H1) of the outer body (3) shown in Fig. 2i for tightening the screws (S) of the clamp body of the inner body (2). The resulting situation is shown in Fig. 2j, where the inner body (2) is fastened to the threaded portion (201) of the bolt (200) by means of the clamping means and the outer body (3) is coupled to the nut (100) by means of the complementary hexagonal surface (311).

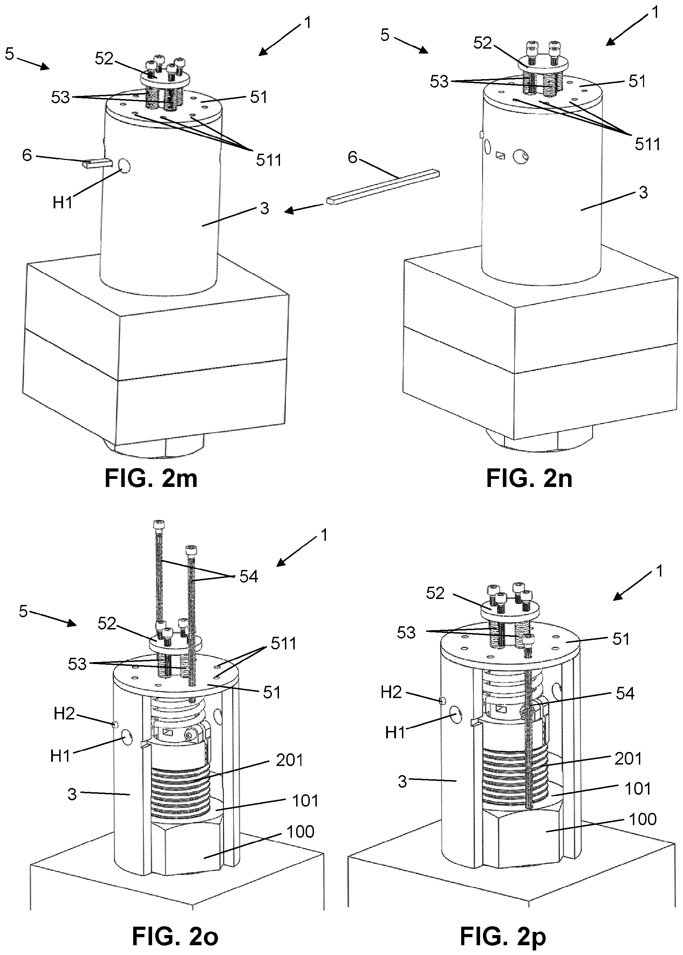

Then, the locking means (5) is installed. As shown in Fig. 2k, first the locking plate (51) is placed on the proximal surface of the outer body (3) with the longitudinal rod (23) protruding proximally from the inner body (2) passing through the first borehole of said locking plate (51). Then, as shown in detail in Fig. 2l, the pressure plate (52) is fastened to the proximal end of said rod (23) with the four compression springs (53) sandwiched and compressed between the locking plate (51) and said pressure plate (52). The four compression springs (53) thereby exert a force tending to separate the pressure plate (52) from the locking plate (51). Since the pressure plate (52) is fastened to the rod (23) of the inner body (2) and, in turn, the inner body (2) is fastened to the threaded portion (201) of the bolt (200), the result is that said force pushes the locking plate (51) distally against the proximal surface of the outer body (3). This force causes the rotation between said outer body (3) and the locking plate (51) to be blocked, i.e. prevented. The resulting situation is shown in Fig. 2m.

Now, since the rotation between the outer body (3) and the locking plate (51) is now blocked by the locking means (5) disclosed above, the blocking pin (6) that was previously used for provisionally preventing such rotation is extracted. The extraction of the blocking pin (6) is shown in Fig. 2n.

Fig. 2o shows how two detection rods (54) are threaded into two opposite second boreholes (511) of the locking plate (51). As shown in Fig. 2p, these detection rods (54) are introduced carefully until the respective distal ends thereof touch the proximal surface (101) of the nut (100).

The device (1) of the invention is now installed and fully operative. As long as the proximal surface (101) of the nut (100) remains in the initial position, the biasing force exerted by the four compression springs (53) pushes the locking plate (51) against the proximal end of the outer body (3). In this situation, either mere friction or complementary particularly designed structures provided on the distal surface of the locking plate (51) and the proximal end of the outer body (3) prevent the rotation of the outer body (3) with respect to the locking plate (51), i.e. the tightening torque is conveniently kept stored in the helical spring (4). However, when the nut (100) loses tension, the proximal surface (101) thereof moves proximally a predetermined distance with respect to said initial position. As a consequence, the detection rods (54) are pushed proximally and so is the locking plate (51). The engagement distal surface of the locking plate (51) and the proximal end of the outer body (3) ceases, or at least is reduced, thereby releasing the rotation between the inner body (2) and the outer body (3). The rotational biasing force of the helical spring (4) causes the outer body (3) to in the clockwise direction, thus tightening the nut (100) into the bolt (100). The nut (100) is sufficiently tightened when the proximal surface (101) thereof returns to the initial position, in which moment the locking plate (51) naturally returns to its initial position abutting against the proximal end of the outer body (3). The rotation of the outer body (3) is again blocked by the locking means (5), and the device (1) remains in this situation waiting for the next nut loosening event.

### Second configuration: detection of the displacement of the proximal end of the bolt

A second configuration of the invention where the displacement of the proximal end of the bolt is detected is now disclosed.

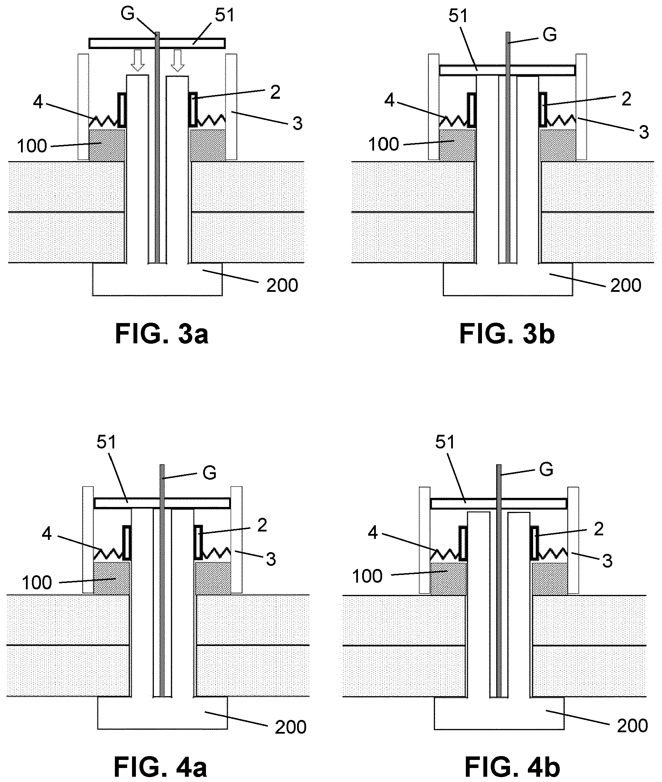

Figs. 3a and 3b show the inner body (2) coupled to the bolt (200). The outer body (2) merely surrounds the bolt (200), leaving the proximal end of said bolt (200) free to engage the locking means as disclosed in detail further below. The hollow outer body (3) is essentially cylindrical but has a hexagonal distal portion for engaging the nut (200). A torsion spring means (4) is provided between the inner body (2) and the outer body (3) such that, when one of these two components is rotated with respect to the other, a torque is exerted by the torsions spring means (4). A gage rod (G) is also shown in the figures. The gage rod (G) is essentially a rod installed inside an axial borehole made in the shank of the bolt (200). The gage rod (G) protrudes from the bolt (200) in a proximal direction.

The locking means in this configuration comprises a locking plate (51). The locking plate (51) has smaller a diameter than the outer hollow body (3), and therefore it can be introduced in a distal direction inside said hollow body (3), as shown in Fig. 3a, until a distal surface of said locking plate (51) abuts against a proximal end of the bolt (200), as shown in Fig. 3b. The distal surface of the locking plate (51) and the surface of the proximal end of the bolt (200) are configured such that, when one abuts against the other, rotation between them is not allowed. Once introduced until abutting against the proximal end of the bolt (200), the locking plate (51) is rigidly coupled to the inner surface of the outer hollow body (3), and the locking plate (51) is further rotatably coupled to the gage rod (G). That is, the locking plate (51) can rotate with respect to the gage rod (G), but it cannot move longitudinally with respect to said gage rod (G).

Therefore, in initial the situation shown in Fig. 4a, the torque is stored in the torsion spring means (4) because no rotation of the hollow outer body (3), and therefore of the nut (100), with respect to the locking plate (51), and therefore of the bolt (200), is allowed. Then, as shown in Fig. 4b, when the nut (100) starts to lose tension, the proximal surface of the bolt (200) moves distally. The proximal surface of the bolt (200) therefore separates from the distal surface of the locking plate (51). Note that the locking plate is in a fixed longitudinal position due to its fixation to the gage rod (G) and the hollow outer body (3). Then, the torque stored in the torsion spring means (4) is released, thereby causing the nut (100) to be retightened. Upon the nut (100) retightening, the proximal end of the bolt (200) moves longitudinally in the proximal direction until abutting against the distal end of the locking plate (51) again. The rotation of locking plate (51) and bolt (200) is blocked again. The nut (100) has been retightened.

In this document, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Device (1) for automatically retightening bolted joints comprising a nut (100) threaded into a threaded portion of a bolt (200) having a longitudinal axis (L), **characterized by** comprising:
- an inner body (2) comprising a distal portion (21) and a proximal portion (22), where the distal portion (21) comprises a clamping means configured for clamping a threaded portion (201) of the bolt (200);
- a hollow outer body (3) comprising a distal portion (31) and a proximal portion (32), where the proximal portion (32) is configured for housing the inner body (2) rotatably around the longitudinal axis (L), and where the distal portion (31) is configured for being coupled to the nut (100);
- a torsion spring means (4) connected between the inner body (2) and the outer body (3) such that, when loaded, said torsion spring means (4) generates a biasing rotational force around the longitudinal axis (L) between the inner body (2) and the outer body (3); and
- a locking means (5) configured for selectively blocking the rotation between the inner body (2) and the outer body (3) such that, when a proximal surface (101) of the nut (100) or a distal end of the bolt (200) is in an initial position, the locking means (5) prevents the rotation between the inner body (2) and the outer body (3) while, upon the proximal surface (101) of the nut (100) moving proximally, or the proximal end of the bolt (200) moving distally, a predetermined distance with respect to said initial position, the locking means (5) releases the rotation between the inner body (2) and the outer body (3), whereby the biasing force of the torsion spring means (4) causes the outer body (3) to retighten the nut (100).

2. Device (1) according to claim 1, where the locking means (5) comprises:
- a locking plate (51) configured to abut against a proximal end of the outer body (3), the locking plate (51) comprising a first borehole, whereby a rod (23) stemming proximally in the longitudinal direction from the proximal portion (22) of the inner body (2) passes through said first borehole;
- a pressure plate (52) fastened to a proximal end of said rod (23);
- at least one compression spring means (53) provided between the pressure plate (52) and a proximal surface of said locking plate (51), said at least one compression spring means (53) generating a biasing force pushing the pressure plate (51) distally against the proximal end of the outer body (3); and
- at least one detection rod (54) configured to be threaded into a respective second borehole (511) of the locking plate (51) until a distal end of said detection rod (54) abuts against the proximal (101) surface of the nut (100),
such that, when the proximal surface (101) of the nut (100) is in the initial position, the biasing force exerted by the at least one compression spring means (53) causes the locking plate (51) to abut against the proximal end of the outer body (3), thereby preventing the rotation between the inner body (2) and the outer body (3) while, upon the proximal surface (101) of the nut (100) moving proximally a predetermined distance with respect to said initial position, the detection rod (54) is pushed in a proximal direction and so is the locking plate (51), thereby releasing the rotation between the inner body (2) and the outer body (3).

3. Device (1) according to any of the previous claims, where the clamping means comprises a clamp body having at least one transverse tightening screw (S) configured for causing said clamp body to pressure fit around said threaded portion (201) of the bolt (200).

4. Device (1) according to claim 3, where an inner cavity of the clamp body comprises a female thread configured to match the male thread of the threaded portion (201) of the bolt (200).

5. Device (1) according to any of claims 3-4, where the outer body (3) further comprises at least a first hole (H 1) configured for a screwdriver to pass through for operating the tightening screws (S) of the clamping means of the inner body (2).

6. Device (1) according to any of the previous claims, where the distal portion (21) and the proximal portion (22) of the inner body (2) are cylindrical, the diameter of the distal portion (21) being larger than the diameter of the proximal portion (22).

7. Device (1) according to any of the previous claims, where an inner surface (311) of the distal portion (31) of the outer body (3) is hexagon shaped for matching the outer surface of the nut (100).

8. Device (1) according to any of the previous claims, where the torsion spring means (4) comprises a helical spring provided around the proximal portion (22) of the inner body (2), said helical spring comprising a first end fastened to the inner body (2) and a second end fastened to the outer body (3).

9. Device (1) according to claim 8, where the first end of the helical spring is housed within a first orifice (O1) of the proximal portion (22) of the inner body (2) and the second end of the helical spring passes through a second hole (H2) of the outer body (3).

10. Device (1) according to any of the previous claims, further comprising an auxiliary rotation blocking means configured for blocking the rotation between the inner body (2) and the outer body (3) during assembly of the device (1).

11. Device (1) according to claim 10, where the auxiliary rotation blocking means comprises a blocking pin (6) configured for passing through a third hole (H3) of the outer body (3) until an end of said blocking pins (6) enters a second orifice (O2) of the inner body (2).

12. Device (1) according to any of the previous claims, where the torsion spring means (4) releases a visual indicator to facilitate detection of bolts (200) that have lost tension.

13. Method for assembling a device (1) for automatically retightening bolted joints comprising a nut (100) threaded into a threaded portion of a bolt (200) having a longitudinal axis (L), **characterized by** comprising the following steps:
- connecting a torsion spring means (4) to an inner body (2), where the inner body (2) comprises a distal portion (21) and a proximal portion (22), the distal portion (21) further comprising a clamping means configured for clamping a threaded portion of the bolt (200);
- housing the inner body (2) and the torsion spring means (4) connected thereto within a proximal portion (32) of a hollow outer body (3) such that the inner body (2) is rotatable around the longitudinal axis (L), the outer body (3) further comprising a distal portion (31) configured for being coupled to the nut (100);
- connecting the torsion spring means (4) to the outer body (3) such that, when loaded, said torsion spring means (4) generates a biasing rotational force around the longitudinal axis (L) between the inner body (2) and the outer body (3);
- causing the outer body (3) to rotate with respect to the inner body (2) for loading the torsion spring means (4);
- actuating an auxiliary rotation blocking means for provisionally preventing the rotation between the inner body (2) and the outer body (3);
- displacing the outer body (3) longitudinally in a distal direction for coupling the distal portion (31) of the outer body (3) to the nut (100) and coupling the clamping means of the distal portion (21) of the inner body (2) to the threaded portion of the bolt (200);
- setting up a locking means (5) configured for selectively blocking the rotation between the inner body (2) and the outer body (3) such that, when a proximal surface of the nut (100) or the bolt (200) is in an initial position, the locking means (5) prevents the rotation between the inner body (2) and the outer body (3) while, upon the proximal surface of the nut (100) or of the bolt (200) moving proximally a predetermined distance with respect to said initial position, the locking means (5) releases the rotation between the inner body (2) and the outer body (3), whereby the biasing force of the torsion spring means (4) causes the outer body (3) to retighten the nut (100); and
- actuating the auxiliary rotation blocking means for releasing the rotation between the inner body (2) and the outer body (3).

14. Method according to claim 13, where the step of setting up a locking means (5) further comprises the following steps:
- abutting a locking plate (51) against a proximal end of the outer body (3), where a rod (23) stemming proximally in the longitudinal direction from the proximal portion (22) of the inner body (2) passes through a first borehole of the locking plate (51);
- providing at least one compression spring means (53) resting against a proximal surface of said locking plate (51);
- fastening a pressure plate (52) to a proximal end of said rod (23) such that the compression spring means (53) are compressed between the locking plate (51) and said pressure plate (52), the compression spring means (53) generating a biasing force pushing the pressure plate (51) distally against the proximal end of the outer body (3);
- threading at least one detection rod (52) through at least a respective second borehole (511) of the locking plate (51) until a distal end of said detection rod (54) abuts against the proximal surface of the nut (100) such that, when the proximal surface of the nut (100) is in the initial position, the biasing force exerted by the at least one compression spring means (53) causes the locking plate (51) to abut against the proximal end of the outer body (3), thereby preventing the rotation between the inner body (2) and the outer body (3) while, upon the proximal surface of the nut (100) moving proximally a predetermined distance with respect to said initial position, the detection rod (54) is pushed in a proximal direction and so is the locking plate (51), thereby releasing the rotation between the inner body (2) and the outer body (3).

15. Method according to any of claims 13-14, where:
- the step of actuating the auxiliary rotation blocking means for provisionally blocking the rotation between the inner body (2) and the outer body (3) comprises introducing a blocking pin (6) through a third hole (H3) of the outer body (3) until an end of said blocking pins (6) enters a second orifice (O2) of the inner body (2), and
- the step of actuating the auxiliary rotation blocking means for releasing the rotation between the inner body (2) and the outer body (3) comprises extracting said blocking pin (6) from the second orifice (O2) and the third hole (H3).
